# FASCICULE DE BREVET EUROPEEN

(11) **EP 1 106 842 B1**
(45) Date de publication et mention de la délivrance du brevet: **28.01.2004**
(21) Numéro de dépôt: 00410141.6
(22) Date de dépôt: 15.11.2000
(51) Int. Cl.: F16B 5/02, F16B 41/00, E04C 2/40, E04F 15/04, F16B 5/00

(54) **Dispositif d'assemblage sans vis apparente pour des lames de bois**
Verbindungsvorrichtung für Holzleisten ohne sichtbare Schraube
Connecting device for wooden strips without visible screw

(30) Priorité: 03.12.1999 FR 9915286
(43) Date de publication de la demande: 13.06.2001
(73) Titulaire: Compagnie des Bois - Architecture et Ingenierie, Sarl, 38 610 Gieres (FR)
(72) Inventeur: Fauré, Didier, 38 610 Saint Hilaire du Touvet (FR)
(74) Mandataire: Hecké, Gérard

(56) Documents cités:
- EP-A- 0 038 469
- WO-A-97/04190
- AT-B- 400 611

## Description

### Domaine technique de l'invention

L'invention est relative à un dispositif d'assemblage sans vis apparente, comprenant deux lames de bois parallèles et un élément de fixation intercalaire engagé dans deux rainures de positionnement disposées côte à côte dans les faces latérales desdites lames séparées par un premier écartement inférieur non visible, et une vis de serrage coopérant avec l'élément de fixation pour le blocage des deux lames.

L'invention est aussi relative a un procédé de montage de lames de bois.

### Etat de la technique

Il est connu d'utiliser un dispositif d'assemblage constitué par une entretoise en forme de double coin prenant appui sur les flancs obliques des lames de bois juxtaposées. La vis de fixation est introduite après la mise en place de l'entretoise, ce qui nécessite un jeu relativement important entre les lames pour autoriser le passage de la tête de vis.

Un autre système classique consiste à clouer ou à visser les lames sur les lambourdes au moyen de clous ou de vis apparentes traversant directement les lames. Les remontées d'humidité par capillarité risquent alors de provoquer le pourrissement prématuré du bois.

Un autre dispositif de fixation aveugle par example EP-A-0 038 469 fait usage d'un étrier métallique en forme de U renversé, et enfourché sur la lame. Des vis sont introduites en par le bas, ce qui rallonge le temps de montage.

### Objet de l'invention

L'objet de l'invention consiste à réaliser un dispositif d'assemblage sans vis apparente, ne nécessitant pas de préperçage des lames de bois, et autorisant le montage et le démontage depuis la face avant des lames .

Le dispositif selon l'invention est caractérisée en ce que l'élément de fixation comporte un coulisseau métallique ayant :
- une embase équipée d'une lumière oblongue s'étendant longitudinalement dans la partie centrale pour le passage de la vis,
- deux ailes de retenue orientées en sens inverse l'une de l'autre, et destinées à prendre appui dans les rainures lors du serrage de la vis,
- et une tête de vis dont la dimension extérieure est supérieure au deuxième écartement visible, lequel est ménagé au-dessus des rainures entre les chants supérieurs des deux lames de bois.

Selon un mode de réalisation préférentiel, l'embase du coulisseau présente une section en U, et une cuvette à l'extrémité fermée de la lumière pour le logement de la tête en fin de vissage de la vis. La largeur extérieure de l'embase détermine ledit premier écartement non visible entre les chants inférieurs des deux lames. L'épaisseur du deuxième écartement est inférieure à celle du premier écartement, et cache la plus grande partie de la tête de vis, sauf la partie centrale où se trouve l'empreinte pour la prise d'un outil.

Selon un autre mode de réalisation, l'élément de fixation et la vis sont réalisés en acier inoxydable.

Selon une variante, l'élément de fixation possède deux ailes de retenue opposées convergentes, coopérant avec au moins une face d'appui inclinée des rainures de positionnement ménagées côte à côte dans les faces latérales des lames.

L'invention concerne également un procédé de montage de lames de bois pour la réalisation d'un plancher ou d'une terrasse extérieure , caractérisé par les étapes successives suivantes :
- visser partiellement au moins une vis dans une lambourde de support, de manière à laisser dépasser la tête de vis,
- poser ensuite deux lames de bois parallèlement l'une à l'autre selon une direction perpendiculaire à la lambourde, en insérant une pièce de fixation en forme de coulisseau dans des rainures latérales selon un mouvement de coulissement longitudinal,
- et visser complètement la vis de serrage pour assurer le blocage définitif des deux lames.

Le prémontage des vis et le coulissement des pièces de fixation dans les rainures des lames de bois permet de réduire au minimum l'intervalle de séparation entre les différentes lames, tout en permettant le montage et le démontage depuis la face avant.

### Description sommaire des dessins

D'autres avantages et caractéristiques ressortiront plus clairement de la description qui va suivre de deux modes de réalisation de l'invention représentés aux dessins annexés dans lesquels:
- les figures 1 et 2 sont des vues schématique en coupe du dispositif d'assemblage selon l'invention, respectivement en position prémontée et en position de fin de vissage de la vis de fixation ;
- la figure 3 montre une vue en élévation de l'élément de fixation ;
- la figure 4 est une vue en plan de la figure 3 ;
- la figure 5 est une vue de profil de la figure 4 ;
- les figures 6 à 11 représentent les étapes successives du procédé de montage et de fixation des lames;
- la figure 12 représente une vue identique de la figure 2 d'une variante de réalisation;
- la figure 13 est une vue en plan de l'élément de fixation selon la figure 12.

### Description d'un mode de réalisation préférentiel

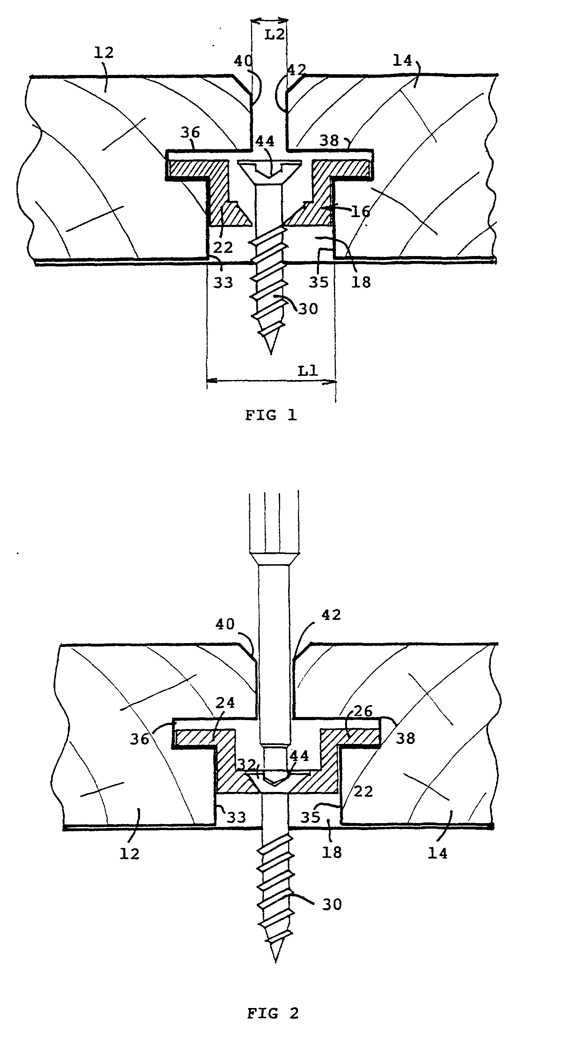

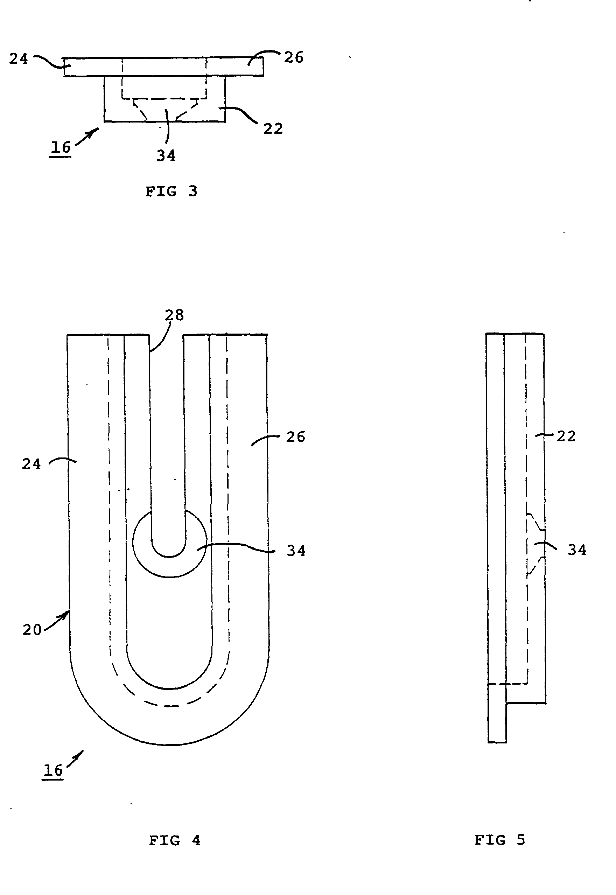

En référence aux figures 1 à 5, un dispositif d'assemblage 10 de deux lames de bois 12, 14 parallèles, comporte un élément de fixation 16 invisible, lequel est logé dans l'intervalle 18 agencé entre les faces latérales juxtaposées des lames 12, 14. L'élément de fixation 16 intercalaire comprend un coulisseau 20 métallique doté d'une embase 22 de fixation, et de deux ailes de retenue 24, 26 opposées, orientées en sens inverse l'une de l'autre.

L'embase 22 présente une section en U, et un fond équipé d'une lumière 28 oblongue s'étendant longitudinalement dans la partie centrale pour l'introduction d'une vis 30 à tête 32 tronconique. L'extrémité fermée de la lumière 28 est élargie selon une cuvette 34 pour le logement de la tête 32 en fin de vissage de la vis 30. La largeur extérieure de l'embase 22 détermine un premier écartement L1 non visible entre les chants inférieurs 33, 35 des deux lames 12, 14.

Les deux ailes de retenue 24, 26 s'engagent transversalement dans des rainures 36, 38 de positionnement ménagées côte à côte dans les faces latérales des lames 12, 14. L'élément de fixation 16 et la vis 30 sont réalisés en acier inoxydable.

Les chants supérieurs 40, 42 font saillie des chants inférieurs 33, 35, de manière à définir un deuxième écartement L2 visible de l'extérieur et présentant une faible épaisseur, autorisant l'introduction d'un outil pour le serrage de la vis 30. Le deuxième écartement L2 est inférieur au premier écartement L1, ainsi qu'au diamètre extérieur de la tête 32 de vis 30.

La figure 1 montre le prépositionnement de la vis 30 avant la fixation définitive des lames 12, 14. Le serrage de la vis 30 est illustré sur la figure 2, lequel provoque une répartition uniforme des forces de pression sur les deux ailes de retenue 24, 26 sollicitant les deux lames 12, 14 vers le bas. Un tel dispositif de fixation ne nécessite pas de préperçages des lames de bois 12, 14, et évite de ce fait les remontées d'eau par effet de capillarité.

L'écartement L2 de faible épaisseur cache la plus grande partie de la tête 32 de vis 30, et ne laisse apparent que l'empreinte 44 pour la prise de l'outil.

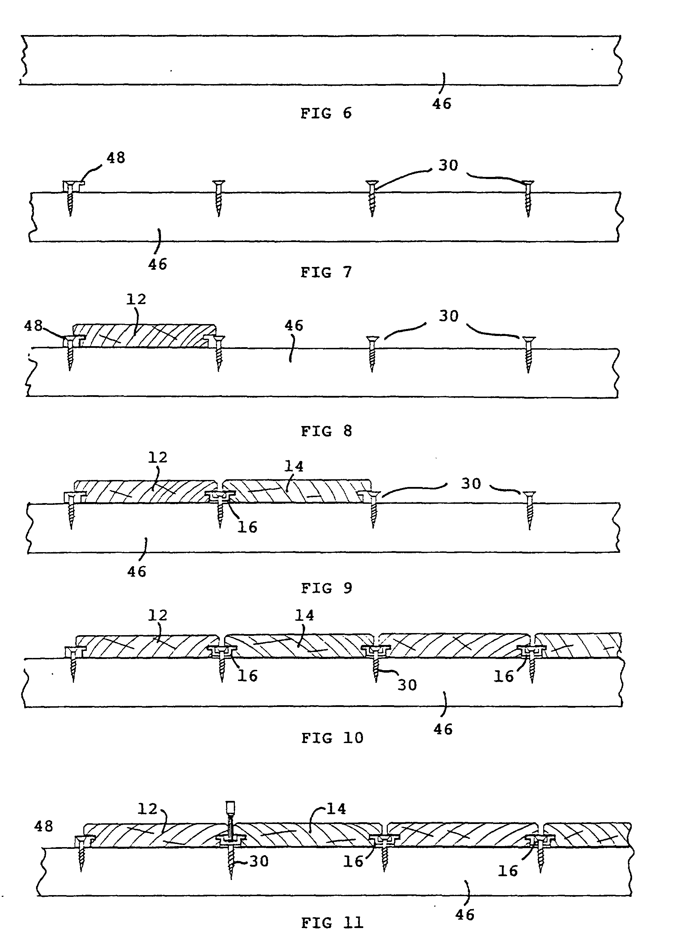

Les différentes étapes du procédé de montage des lames 12, 14... sans vis apparente, est représenté sur les figures 6 à 11.

Après mise en place des lambourdes 46 (figure 6), on visse partiellement les vis 30 à des endroits prédéterminés des lambourdes 46 en laissant dépasser la partie supérieure non filetée (figure 7). Une butée 48 équipée d'une seule aile de retenue, est utilisée pour caler la lame 12 au début de la première rangée (figure 8).

Sur la figure 9, l'élément de fixation 16 est mis en place dans les rainures 36, 38 des deux lames 12, 14 juxtaposées, et est déplacé jusqu'à la venue en engagement en fin de course contre la partie non filetée de la vis 30. Le mouvement de coulissement est possible 30 grâce à la lumière 28 rectiligne ménagée dans l'embase 22.

La figure 10 montre la suite du montage pour les lames des autres rangées parallèles. Les vis 30 restent toutes en position desserrée lors de la pose des lames.

Le serrage définitif des vis 30 intervient en fin de pose des lames et d'insertion des éléments de fixation 16 correspondants (figure 11). L'écartement L2 entre les lames 12, 14...est juste suffisant pour le passage de l'outil.

Une terrasse en bois construite selon le procédé précité est facile à mettre en oeuvre, et le montage est rapide. L'accès permanent aux empreintes 44 des têtes 32 de vis permet également de dévisser les vis 30 lors d'un éventuel démontage des lames de bois.

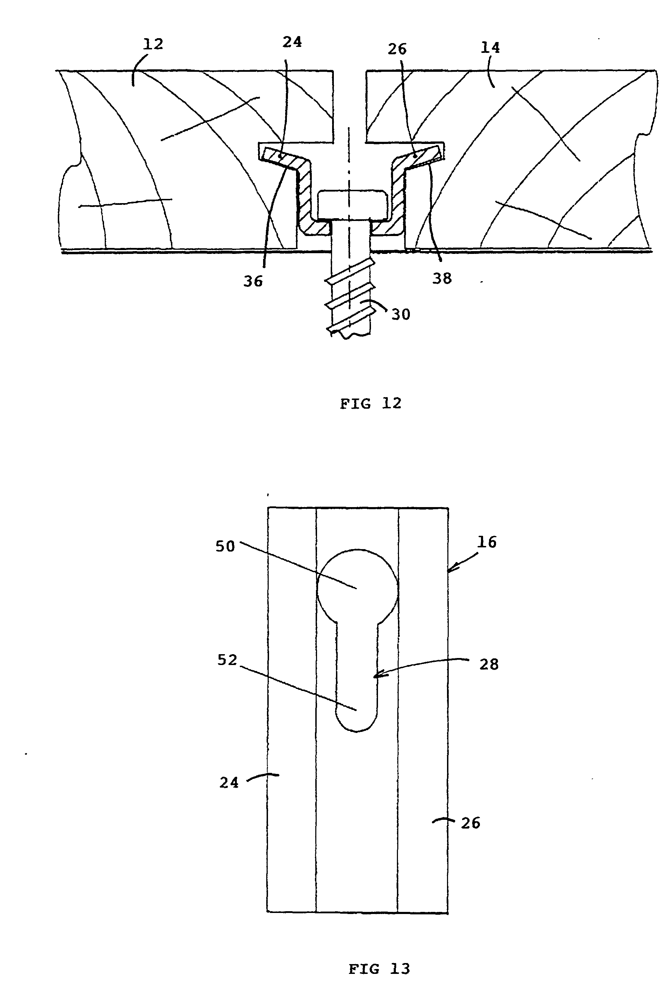

Sur la variante des figures 12 et 13, les deux ailes de retenue 24, 26 opposées de l'élément de fixation 16 sont convergentes au lieu d'être coplanaires comme à la figure 1. Les rainures 36, 38 de positionnement ménagées côte à côte dans les faces latérales des lames 12, 14 possèdent au moins une face d'appui inclinée. L'élément de fixation 16 métallique est réalisé en acier inoxydable déformable lui conférant un effet d'élasticité, de manière à compenser le retrait et la dilatation du bois sans diminuer le serrage de la vis 30. Le fond de l'élément de fixation 16 est doté d'une boutonnière ayant un trou circulaire 50 pour le passage de la tête de vis, et une rainure 52 de largeur inférieure à la tête de vis.

## Revendications

1. Dispositif d'assemblage sans vis apparente comprenant deux lames (12, 14) de bois parallèles et un élément de fixation (16) intercalaire engagé dans deux rainures (36, 38) de positionnement disposées côte à côte dans les faces latérales desdites lames (12,14) séparées par un premier écartement (L1) inférieur non visible, et une vis (30) de serrage coopérant avec l'élément de fixation (16) pour le blocage des deux lames (12, 14), dans lequel
l'élément de fixation (16) comporte un coulisseau (20) métallique ayant :
- une embase (22) équipée d'une lumière (28) oblongue s'étendant longitudinalement dans la partie centrale pour le passage de la vis (30),
- deux ailes de retenue (24, 26) orientées en sens inverse l'une de l'autre, et destinées à prendre appui dans les rainures (36, 38) lors du serrage de la vis (30),
- et une tête (32) de vis (30) dont la dimension extérieure est supérieure au deuxième écartement (L2) supérieur visible, lequel est ménagé au-dessus des rainures (36, 38) entre les chants supérieurs (40, 42) des deux lames (12, 14) de bois.

2. Dispositif d'assemblage selon la revendication 1, **caractérisé en ce que** l'embase (22) du coulisseau (20) présente une section en U, et une cuvette (34) à l'extrémité fermée de la lumière (28) pour le logement de la tête (32) en fin de vissage de la vis (30).

3. Dispositif d'assemblage selon la revendication 1, **caractérisé en ce que** la largeur extérieure de l'embase (22) détermine ledit premier écartement (L1 ) non visible entre les chants inférieurs (32, 35) des deux lames (12, 14).

4. Dispositif d'assemblage selon la revendication 1 ou 3, **caractérisé en ce que** l'épaisseur du deuxième écartement (L2) est inférieure à celle du premier écartement (L1), et cache la plus grande partie de la tête (32) de vis, sauf la partie centrale où se trouve l'empreinte (44) pour la prise d'un outil.

5. Dispositif d'assemblage selon l'une quelconque des revendications précédentes, **caractérisé en ce que** l'élément de fixation (16) et la vis (30) sont réalisés en acier inoxydable.

6. Dispositif d'assemblage selon l'une quelconque des revendications précédentes, **caractérisé en ce que** l'élément de fixation (16) possède deux ailes de retenue (24, 26) opposées convergentes coopérant avec au moins une face d'appui inclinée des rainures (36, 38) de positionnement ménagées côte à côte dans les faces latérales des lames (12,14).

7. Procédé de montage de lames de bois (12, 14...) pour la réalisation d'un plancher ou d'une terrasse extérieure , **caractérisé par** les étapes successives suivantes :
- visser partiellement au moins une vis (30) dans une lambourde (46) de support, de manière à laisser dépasser la tête (32) de vis,
- poser ensuite deux lames (12, 14) de bois parallèlement l'une à l'autre selon une direction perpendiculaire à la lambourde (46), en insérant une pièce de fixation (16), en forme de coulisseau (20) dans des rainures (36, 38) latérales selon un mouvement de coulissement longitudinal,
- et visser complètement la vis (30) de serrage pour assurer le blocage définitif des deux lames (12, 14).

## Patentansprüche

1. Verbindungsvorrichtung ohne sichtbare Schraube mit zwei parallelen Holzplatten (12, 14) und einem dazwischen gesetzten Befestigungselement (16), das in zwei in den Seitenflächen der Platten (12, 14) nebeneinander angeordnete Positionierungsnuten (36, 38) eingreift, die durch einen nicht sichtbaren ersten, unteren Abstand (L1) voneinander getrennt sind, wobei eine Stellschraube (30) mit dem Befestigungselement (16) zum Blockieren der beiden Platten (12, 14) zusammenwirkt, bei der:
das Befestigungselement (16) einen Metallschlitten (20) umfasst, der aufweist:
- eine Basis (22), die mit einer länglichen Öffnung (28) versehen ist, die sich zum Durchführen der Schraube (30) der Länge nach im mittleren Bereich erstreckt,
- zwei Rückhaltearme (24, 26), die in entgegengesetzter Richtung voneinander ausgerichtet und dazu bestimmt sind, beim Anziehen der Schraube (30) in den Nuten (36, 38) aufzuliegen,
- und einen Kopf (32) der Schraube (30), dessen Außenabmessungen größer sind als der sichtbare zweite, obere Abstand (L2), der über den Nuten (36, 38) zwischen den Kanten (40, 42) der beiden Holzplatten (12, 14) vorgesehen ist.

2. Verbindungsvorrichtung nach Anspruch 1, **dadurch gekennzeichnet, dass** die Basis (22) des Schlittens (20) einen U-förmigen Querschnitt und am geschlossenen Ende der Öffnung (28) eine schalenförmige Ausnehmung (34) aufweist, die den Kopf (32) aufnehmen soll, nachdem die Schraube (30) eingedreht wurde.

3. Verbindungsvorrichtung nach Anspruch 1, **dadurch gekennzeichnet, dass** die äußere Breite der Basis (22) den nicht sichtbaren ersten Abstand (L1) zwischen den Kanten (32, 35) der beiden Platten (12, 14) bestimmt.

4. Verbindungsvorrichtung nach Anspruch 1 oder 3, **dadurch gekennzeichnet, dass** der zweite Abstand (L2) schmaler ist als der erste Abstand (L1) und den größten Teil des Schraubenkopfs (32) bis auf den mittleren Bereich verdeckt, in dem sich der Stempel (44) für die Aufnahme eines Werkzeugs befindet.

5. Verbindungsvorrichtung nach einem der vorstehenden Ansprüche, **dadurch gekennzeichnet, dass** das Befestigungselement (16) und die Schraube (30) aus rostfreiem Stahl sind.

6. Verbindungsvorrichtung nach einem der vorstehenden Ansprüche, **dadurch gekennzeichnet, dass** das Befestigungselement (16) zwei gegenüber liegende, zusammenlaufende Rückhalteflügel (24, 26) besitzt, die mit mindestens einer geneigten Anlagefläche der Positionierungsnuten (36, 38) zusammenwirken, die nebeneinander in den Seitenflächen der Platten (12, 14) vorgesehen sind.

7. Verfahren zum Montieren von Holzplatten (12, 14, ...) zur Herstellung eines Bodens oder einer Außenterrasse, **gekennzeichnet durch** folgende aufeinander folgende Schritte:
- parzielles Eindrehen mindestens einer Schraube (30) in einen Trägerbalken (46), wobei der Schraubenkopf (32) heraussteht,
- anschließend Auflegen zweier Holzplatten (12, 14) parallel zueinander in einer zum Trägerbalken (46) lotrechten Richtung **durch** Einfügen eines Befestigungsteils (16) in Form eines Schlittens (20) in die seitlichen Nuten (36, 38) in einer längs gerichteten Gleitbewegung,
- und vollständiges Eindrehen der Stellschraube (30) zum endgültigen Blockieren der beiden Platten (12, 14).

## Claims

1. An assembly device without visible screws comprising two parallel wooden slats (12, 14), and an intercalated fixing element (16) engaged in two positioning grooves (36, 38) arranged side by side in the side faces of said slats (12, 14) separated by a first invisible lower gap (L1), and a fixing screw (30) working in conjunction with the fixing element to perform securing of the two slats (12, 14), wherein the fixing element (16) comprises a metal slide (20) having:
- a base part (22) equipped with an oblong aperture (28) extending longitudinally in the central part for the screw (30) to pass through,
- two securing wings (24, 26) oriented in opposite directions from one another and designed to press in the grooves (36, 38) when the screw (30) is tightened,
- and a screw head (32) whose external dimension is greater than the visible second gap (L2) which is arranged above the grooves (36, 38) between the upper edges (40, 42) of the two wooden slats (12, 14).

2. The assembly device according to claim 1, wherein the base part (22) of the slide (20) presents a U-shaped section, and a dish (34) at the closed end of the aperture (28) to house the screw head (32) when the screw (30) has been screwed fully tight.

3. The assembly device according to claim 1, wherein the external width of the base part (22) determines said invisible first gap (L1 ) between the bottom edges (32, 35) of the two slats (12, 14).

4. The assembly device according to claim 1 or 3, wherein the thickness of the second gap (L2) is smaller than that of the first gap (L1), and hides most of the head (32) of the screw, except for the central part where the gripping indentation (44) for a tool to grip is located.

5. The assembly device according to any one of the previous claims, wherein the fixing element (16) and the screw (30) are made of stainless steel.

6. The assembly device according to any one of the previous claims, wherein the fixing element (16) has two convergent opposite securing wings (24, 26) working in conjunction with at least one inclined bearing face of the positioning grooves (36, 38) arranged side by side in the side faces of the slats (12, 14).

7. A process for assembly of wooden slats (12, 14...) to make a floor or an outside terrace, **characterized by** the following successive steps:
- partially screwing at least one screw (30) into a bracing sleeper (46) so as to leave the head (32) of the screw protruding out,
- then fitting two wooden slats (12, 14) parallel to one another in a direction perpendicular to the sleeper (46), inserting a fixing part (16) in the form of a slide (20) in the lateral grooves (36, 38) with a longitudinal sliding movement,
- and screwing the securing screw (30) fully tight to achieve final securing of the two slats (12, 14).
